# EUROPEAN PATENT APPLICATION

(11) **EP 2 154 642 A1**
(43) Date of publication of application: **17.02.2010**
(21) Application number: 09002125.4
(22) Date of filing: 16.02.2009
(51) Int. Cl.: G06Q 30/00

(54) **System and method for providing consumer information on a printed coupon or label**

(30) Priority: 12.08.2008 US 190368
(71) Applicant: Mettler-Toledo, Inc., Columbus OH 43240-2020 (US)
(72) Inventor: Hipsher, Brian, Worthington, Ohio 43085 (US)
(74) Representative: Leinweber & Zimmermann

(57) **Abstract**

A system and method for providing consumer information on a printed coupon or label. Consumer information may be gathered/obtained in a number of ways and embedded on a coupon or label in the form if a bar code or other readable format. When consumer information is embedded on a coupon, the promotion presented by the coupon may be selected at least in part using the consumer information. The consumer information may be subsequently collected at a POS location or may be transmitted at the time of coupon/label printing. Additional information about a consumer may be collected subsequent to printing of a coupon or label, and such information may also be collected. The consumer information may be provided to a marketer or other interested recipient.

## Description

### BACKGROUND OF THE INVENTIVE FIELD

The present invention is directed to providing consumer information on a printed coupon or label. More particularly, the present invention is directed to a system and method for embedding consumer information on a printed coupon or label such that said information may be subsequently retrieved from said coupon or label by appropriate means.

It is well known that manufacturers and retailers employ coupons and other techniques to bolster sales and influence shopping behavior. Coupons exist in many formats and may be received by a shopper from a variety of sources, at a variety of times. For example, coupons for particular products may appear in newspaper advertisements, or may be received by a consumer via a direct mailing campaign.

Coupons of the type appearing in newspapers or sent by direct mail are an attempt to influence shopping behavior of the general public, and are not, and generally cannot be, tailored to an individual consumer. Consequently, point-of-sale (POS) coupons also exist to permit retailers to better tailor incentives to particular consumers. POS coupons may be based on the products purchased by a shopper on a given day (as identified by a POS device), and/or by the purchase history of the shopper (as determined, for example, from a frequent shopper card). Such coupons are typically printed when a shopper checks out, such as on a sales receipt or on a separately printed advertisement that is also presented to the shopper. Unfortunately, since such coupons are redeemable only upon return of the shopper to the retailer, such coupons cannot be used to influence shopping behavior in real time.

In light of the foregoing deficiencies, coupons reflective of current shopper behavior and/or capable of influencing shopping behavior in real time have also been introduced. A primary example of such coupons are those printed and attached to goods purchased in specialty departments (e.g., bakery, meat, fish, pharmacy) of a retail establishment. These coupons may be printed, for example, by a weighing scale or a kiosk resident in a given department, and the incentives provided thereby may be reflective of a shopper's current purchase. For example, such coupons may be designed to encourage the purchase an additional amount of the same product(s) or the purchase of a separate but related product (e.g., a mustard coupon provided with a ham purchase). Such coupons may be instantly redeemable, although redeemability may also be made subject to a subsequent purchase.

As can be understood from the foregoing background, many factors can influence the success of a coupon-based promotion. As such, detailed information about individual consumers and their shopping habits is quite valuable to marketers. That is, rather than relying on general demographic and other information often associated with untargeted and direct mail coupon distribution schemes, marketers would typically prefer to provide individual consumers with incentives that those consumers consider the most attractive. By doing so, manufacturers and/or retailers offering the resulting promotions can best optimize coupon redemption rates and more effectively increase the purchase of additional or related products.

To this end, it can also be understood that developing improved and more efficient techniques for collecting information about individual consumers, and for analyzing and/or storing such information is desirable. While the use of such information in regard to the development of product incentives has been discussed above, it would be apparent to one skilled in the art that such information could also be valuable for other purposes. Similarly, it is also desirable to collect at least some of such information in real time and to ensure that such information is frequently updated to reflect changes in the demographics, shopping habits, and or other attributes of individual consumers. A system and method of the present invention can provide such information.

### SUMMARY OF THE GENERAL INVENTIVE CONCEPT

The present invention is directed to the embedment of individual consumer information onto a printed coupon or label. Such information may include for example, and without limitation, demographic data, store location information, time of promotion execution, and other information typically written to frequent shopper cards or similar storage media.

Consumer information is embedded onto a coupon or label at the time of its printing. The consumer information is embedded onto the coupon or label by an electronic service device at the time of interaction therewith by the consumer. Preferably, but not necessarily, the electronic service device is a weighing device (e.g., weighing scale) or kiosk. However, as would be understood by one skilled in the art, other electronic devices capable of embedding such information as described below may also be employed for this purpose. In one exemplary embodiment, information about a selected product, the location of the store, and various similar data may be known to, or may be determined by, a weighing scale and embedded on a coupon or label associated with the purchased product(s).

With respect to a coupon, such information may also include data relating to the time of promotion execution or other promotion specific information. Other information (e.g., demographic information) may be captured by requiring a consumer to scan a frequent shopper card or by having a store employee enter information about the consumer. In the latter case, such information may be gleaned simply by employee observation, by the use of various known or yet to be developed electronic systems (e.g., cameras and software) designed for such purposes, or by querying the consumer for certain information.

Consumer information may be embedded on a printed coupon or label in any subsequently human or machine readable format. Preferably, however, the consumer information is embedded in the form of a bar code. For example, a bar code separate from that associated with a PLU bar code or a coupon offer bar code may be placed on the coupon or label. Alternatively, the consumer information may be embedded in extra fields on an advanced bar code.

In one embodiment, a coupon containing embedded consumer information is removed at a point-of-sale (POS) location (e.g., register) and subsequently transmitted to a marketer or other intended recipient where the embedded data may be extracted, analyzed and/or saved. In another embodiment, the consumer information embedded on a coupon or label is extracted therefrom at a POS location, such as by the bar code scanner of a typical POS register. In such an embodiment, wherein the bar code(s) containing the pricing and other product specific information and the coupon redemption information is scanned at the point of sale, it can be understood that extraction of the embedded consumer information in the same manner imposes no additional burden on the retailer.

Alternatively, or in addition to the foregoing, the consumer information could be transmitted directly from an electronic service device to a computer system of a marketer or other third party - either in real time or subsequent to a purchase - by accessing the information from a storage device located in or associated with the electronic service device. With this embodiment, customer information need not be, but may be, also embedded on a printed coupon or label. Useful information may, therefore, be collected and disseminated by any of the above techniques. As can be also be appreciated, a combination of these techniques can be employed to determine, for example, the number of coupons redeemed versus the number of coupons issued for a particular promotion.

While customer information may be collected and directly transmitted by an electronic service device, as described above, there are advantages to embedding consumer information on a printed coupon or label that allows the information to be subsequently extracted at a POS register or other device. For example, extracting consumer information from a coupon or label at a POS register affords the opportunity to also collect other information about a consumer, such as information relating to other products selected by the consumer. Extracting consumer information at a POS location may also allow data to be collected from or written to a frequent shopper card or similar storage device.

Once extracted from a coupon or label, the embedded consumer information may be temporarily or permanently stored, locally or remotely, and may be analyzed by marketers, etc., for various purposes, including for the purpose of optimizing ongoing or future coupon-based and/or other incentives/promotions. In certain cases, the consumer information may be used in a general sense by associating the information with other consumers fitting a given demographic profile and/or purchasing a particular product(s). Alternatively, in cases where collected information can be subsequently associated with the particular consumer from which it was received, the information may be used as criteria to select a particular incentive(s) for offer to the consumer upon their next visit to the same or another retailer.

### BRIEF DESCRIPTION OF THE DRAWINGS

In addition to the features mentioned above, other aspects of the present invention will be readily apparent from the following descriptions of the drawings and exemplary embodiments, wherein like reference numerals across the several views refer to identical or equivalent features, and wherein:

FIG. 1 a is a flowchart illustrating the steps of one exemplary method of implementing the present invention, as executed on a weighing scale;

FIG. 1b is a flowchart illustrating the steps of one exemplary method of implementing the present invention, as executed at a kiosk;

FIG. 2 depicts a printed coupon having an independent consumer information bar code located thereon;

FIG. 3 shows a printed coupon having an advanced bar code that includes both consumer information and other information; and

FIG. 4a illustrates a printed product label having an independent consumer information portion and associated consumer information bar code, but having no coupon; and

FIG. 4b depicts a printed product label having a consumer information bar code, but no consumer information portion or coupon.

### DETAILED DESCRIPTION OF EXEMPLARY EMBODIMENT(S)

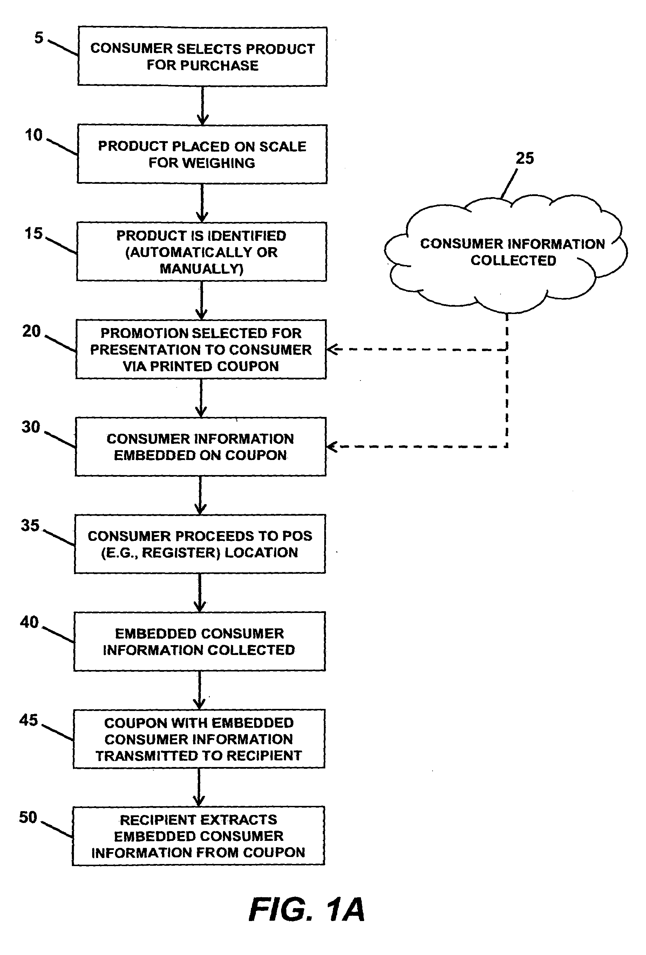

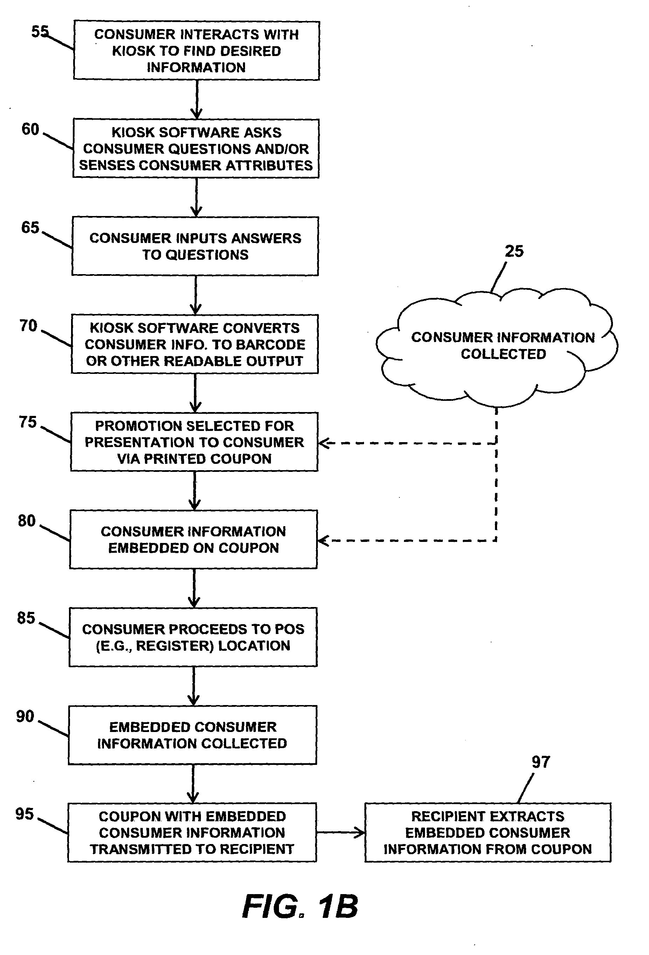

A typical method of embedding consumer information on a coupon according to one embodiment of the present invention is represented by the flow chart of FIG. 1 a. Initially, a consumer has entered a store or other business establishment where at least certain goods are weighed using a weighing scale (scale) prior to tendering payment therefor. Such scales are well known to most consumers and can typically be found, without limitation, in bakery, meat, fish, deli, and pharmacy departments of retailers.

While shopping, the consumer selects one or more products that must be weighed on a scale - which is usually located in or near the department where the product(s) is located. The scale may be a counter scale (i.e., a scale normally operated by a store employee) or a self-service scale (i.e., a scale designed for operation by a consumer). A selected product is placed on the scale **10** to obtain the weight of the product.

Once located on the scale, the product is identified **15**. Identification may be accomplished by a number of techniques including, for example, scanning a bar code, entering a PLU code, visual recognition, etc. Product identification may also be accomplished via other various techniques known in the art. Once identified, software associated with the scale may function to select and present a particular promotion to the consumer via a printed coupon **20**. The promotion is preferably related in some way to the product placed on the scale, although such is not required by the present invention. It is also possible for a promotion to be selected randomly, or intentionally, without regard to the particular product placed on the scale.

Information about a consumer may be gathered/collected **25** prior to, during, or subsequent to placement of a product selected by the consumer onto the scale. For example, the scale may receive consumer information from various other systems used to monitor consumers and their habits, patterns, etc. These systems may include those designed to track consumer movement through a store, those designed to monitor consumers during product selection (e.g., at a deli counter), etc. However, all such systems and methods of data collection may be utilized.

Consequently, at the time of selecting a promotion to offer a consumer **20**, specific information relating to the consumer may have been collected and may be used in selecting the promotion that will be offered. Of course, as previously mentioned, the offered promotion may be based only on the product to be weighed, could be randomly selected, etc. It is expected, however, that combinations of customer-specific information and product information will produce the most appropriately targeted promotions.

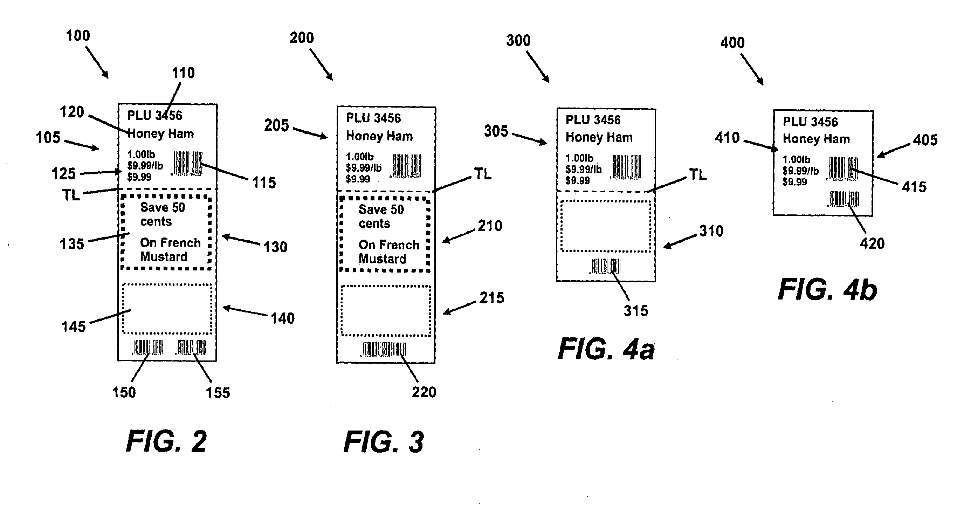

In any event, at the time of coupon printing - which may be effectuated by the scale or a printer attached to or otherwise associated with the scale - some or all of the collected consumer information is embedded on the coupon **30**. The information may be embedded on the coupon in any subsequently human or machine readable form. Preferably, however, the consumer information is embedded in the form of a bar code. For example, a unique consumer information bar code may be placed on the coupon or the information may be appended to another bar code (e.g., a PLU bar code or coupon-related bar code). Various examples of bar codes are discussed in more detail below in relation to FIGS. 2-4.

Once the coupon is printed and affixed or otherwise associated with the product, the product may be taken to a POS register or similar device - typically at consumer checkout **35**. The product may be taken directly to such a POS register after weighing, or the consumer may first shop for additional items.

At the POS register, the product is scanned in normal fashion. Generally, this will entail scanning a PLU bar code or a similar bar code that contains product identifying information, and may also include scanning a coupon bar code relating to an instantly redeemable promotion associated with the product.

Upon arrival of the product at the POS register, the portion of the coupon containing the embedded consumer information is preferably removed from the product **40**. As is described in more detail below, and as shown in FIGS. 2-3, the coupon on which the consumer information is embedded may be designed to facilitate such removal. When a selected POS register is manned by a store employee, the employee will generally remove the appropriate portion of the coupon. When a selected POS register is of the self-service variety, the consumer may remove the appropriate portion of the coupon. A deposit box or some other storage means may be provided to receive detached coupons.

Once removed, the detached portion of the coupon is saved and subsequently transmitted to a marketer or other intended recipient **45**. With respect to the present invention, a coupon may be "transmitted" by physically sending or otherwise transporting it to an intended recipient, by faxing it to the intended recipient, by scanning and electronically mailing it to the intended recipient, or by virtually any other method that causes the embedded consumer information to be delivered in readable form to its intended destination. Detached coupon portions may be transmitted at any number of intervals (e.g., daily, weekly, bi-weekly, etc.).

Once received by an intended recipient, the consumer information embedded on the detached coupon portion is read and analyzed. In this embodiment, reading of the embedded consumer information is accomplished by scanning the consumer information bar code **50**. Once the embedded consumer information is extracted from the detached coupon portion, it can be analyzed in any number of ways and used for any number of purposes. In accordance with at least one aspect of the present invention, the information is used to enhance the appeal and/or effectiveness of promotions. The consumer information can obviously be mined for other purposes, however. The extracted information may also be saved for any length of time on any known storage medium.

An alternative method of embedding consumer information on a coupon according to one embodiment of the present invention is represented by the flow chart of FIG. 1b. This method is similar to the method diagrammed in FIG. 1a, except that in this method, a consumer interacts with a kiosk.

Again, a consumer has initially entered a store or other business establishment where at least certain goods can be selected and subsequently purchased. While shopping, the consumer selects one or more products for which more information is desired. The store includes one or more kiosks with which a consumer may interact to obtain such information. A selected product(s) is then generally taken to a kiosk for that purpose, although the consumer may proceed to the kiosk to obtain said information without the actual product.

Once at the kiosk, the consumer interacts therewith to obtain the desired information **55**. The kiosk software may ask the consumer specific questions and/or may sense specific customer attributes during the interaction 60 period. The consumer responds to questions posed by the kiosk **65.** The kiosk software converts the consumer's answers and/or the sensed consumer attributes into a barcode or other readable output **70**. Once a product is identified by/to the kiosk, the software may function to select and present a particular promotion to the consumer via a printed coupon **75**. The promotion is preferably related in some way to the product identified by/to the kiosk, although such is not required by the present invention. That is, it is also possible for a promotion to be selected randomly or intentionally by a kiosk, without regard to a particular product.

In a similar manner to that described above with respect to the method illustrated in FIG. 1a, information about a consumer may be gathered/collected **25** prior to, during, or subsequent to the interaction between the consumer and the kiosk. Consequently, at the time of selecting a promotion to offer a consumer, specific information relating to the consumer may have been collected and may again be used in selecting the promotion that will be offered.

In any event, at the time of coupon printing - which may be effectuated by the kiosk using a printer attached to or otherwise associated therewith - some or all of the collected consumer information is embedded on the coupon **80.** The information may be embedded on the coupon as described above.

Once the coupon is printed and collected by the consumer, the consumer may proceed to a POS register or similar device **85.** As with the previously described exemplary embodiment, this usually occurs at the time of consumer checkout. The product may be taken directly to such a POS register, or the consumer may first collect the item(s) of interest and/or shop for additional items.

Upon arrival of the product at the POS register, the portion of the coupon containing the embedded consumer information is preferably removed and collected **95**. As is described in more detail below, and as shown in FIGS. 2-3, the coupon on which the consumer information is embedded may be designed to facilitate such removal.

Once removed, the detached portion of the coupon is saved and subsequently transmitted to a marketer or other intended recipient **95.** A coupon may be "transmitted" with respect to this embodiment in any manner described above with respect to the embodiment of FIG. 1 a. Once received by an intended recipient, the consumer information embedded on the detached coupon portion is read and analyzed **97** as previously described.

One embodiment of a product label **100** having a coupon with embedded consumer information is illustrated in FIG. 2. As shown, the product label **100** includes a product information section **105** that will generally include information pertaining to the product to which it will be affixed. In this particular example, the product information section includes a product look-up (PLU) number **110** and a PLU bar code **115** that provide specific information about the product. The product information section **105** is also shown to include a product name **120** and weight and price information **125** for the product. Of course, this particular product information section **105** of the product label **100** is provided for purposes of illustration only, and it would be readily apparent to one skilled in the art that the product information section of such a product label could vary significantly from that shown.

The product label **100** is also shown to include a first coupon section **130** where details **135** regarding an offered promotion are provided. In this exemplary case, the promotion is fifty cents off the purchase of French mustard. Obviously, a wide variety of promotions may be offered, and the coupon associated with such promotions may be instantly redeemable (as shown), or redeemable only upon a subsequent visit/purchase.

This particular coupon also includes a second coupon section **140** that would typically contain additional details **145** about the promotion. For example, this section may list redemption requirements, expiration dates, etc., but is in no way limited thereto.

A promotion bar code **150** may also be located on the second coupon section **140.** Such a promotion bar code will generally contain data regarding the promotion. As shown, a consumer information bar code 155 is also located on the second coupon section **140.** The consumer information bar code **155** contains consumer information, as previously described. In this particular embodiment, the consumer information bar code **155** is a separate bar code. However, as described in more detail below, the information contained therein may instead be appended to another bar code.

The product label of FIG. 2 is designed such that the first coupon section **130** and second coupon section **140** may be detached from the product information section **105** along the illustrated tear line **TL.** In this manner, the entire coupon section can be detached for redemption. It is to be understood, however, that the particular construction shown in FIG. 2 is provided for the purpose of illustration only, and other constructions now known or yet to be developed can also be employed.

A product label having an alternative consumer information bar code is illustrated in FIG. 3. The product label **200** of this embodiment is very similar to that of the product label **100** shown in FIG. 2. To that end, the product label **200** is again shown to include a product information portion **205,** a first coupon portion **210,** and a second coupon portion **215.** Each of these product label portions **205, 210, 215** may include information similar or dissimilar to that shown in corresponding portions of FIG. 2.

As depicted in FIG. 3, however, consumer information is appended to an existing bar code, as opposed to being embedded in a unique bar code (as shown in FIG. 2). That is, the consumer information resides together with other, separately extractable information (promotion information, in this example), in what is commonly referred to as an advanced or extended bar code **220.** As one skilled in the art would be quite familiar with such bar codes, no further detail with respect thereto need be provided herein.

In an alternate embodiment of the present invention, customer information may be collected and embedded on a label or similar element, the label having no relation to a coupon or promotion. As referenced previously, consumer information may be valuable for a number of reasons. Consequently, collecting consumer information relative to specific transactions, demographics, etc., may have utility separate from that of promotion development.

To this end, consumer information may be collected as described above and embedded on a label when a product is placed on a weighing scale. The label may be a product label that contains information about the product to which it is attached (as described above). Alternatively, the label may be a unique consumer information label that is either given to the consumer or separately affixed to the product. Such a label may be adhesive-backed, partially adhesive-backed, or of virtually any other design known in the art. Such a design may wholly remain with a product once attached thereto, or may include a detachable portion designed to receive embedded consumer information.

In embodiments wherein such a label is not provided with a detachable portion, a consumer information bar code or alternate data format as described above may be scanned at a POS register, etc., and the information temporarily stored for subsequent transmission to an intended recipient. In embodiments wherein such a label includes a detachable portion, said portion may be removed at the POS register and set aside for subsequent transmission to the intended recipient. In a manner similar to that described above with respect to the exemplary method represented by the flow chart of FIG. 1, such a detachable label portion can be removed and set aside by a store employee or a consumer. Once received by the intended recipient, the information may be extracted and analyzed as per the previous example for any of various purposes.

As would likely be apparent to one skilled in the art, embedded consumer specific information may also be provided apart from a coupon. For example, such information may simply be printed on a product label. Supplying consumer information in this manner provides retailers and other interested parties with the ability to learn about the buying behavior of consumers who do not participate in frequent shopper (or similar) programs. Alternatively, supplying consumer information in this manner may make it possible to link additional consumer data to a frequent shopper program database. Various consumer information may be of interest to a retailer or marketer, such as, but without limitation, specific demographic information, responses to survey questions, recipe requests or other requests for information related to a selected product, etc. As a specific example, a deli clerk may ask a consumer if the consumer has ever tried a certain brand of mustard. The consumer response is then logged and embedded into the consumer information barcode. This information is then associated with the transaction and can also be associated with the consumer's frequent shopper account - if one exists.

An exemplary product label including embedded consumer information but no coupon is depicted in FIG. 4a. As shown, this particular label **300** once again includes a product information portion **305** that may contain product information as explained above in reference to the product labels **100, 200** of FIGS. 2 and 3, respectively. Unlike the previously shown and described exemplary product labels **100, 200,** however, the coupon section has been eliminated from this product label **300.** Instead, this product label **300** is comprised of only the product information portion **305** and a consumer information portion **310** that contains embedded consumer information. The consumer information is once again embedded in a separate bar code **315,** but could also be of other forms.

In the depicted form, the product label **300** is shown to have an optional tear line **TL** that facilitates detachment of the consumer information portion **310.** It is preferred, in such an embodiment, that the product information portion have a full or partial adhesive backing for affixing the product label **300** to a product, and that the back of the consumer information portion **310** be wholly or substantially devoid of adhesive to facilitate its detachment from the product information portion **305** and from the product. In another embodiment, the consumer information portion **310** may be adhesive-backed or otherwise affixed to the product along with the product information portion **305,** so as to remain with the product. In this case, the consumer information embedded in the bar code **315** may be extracted at a POS register for subsequent transmission (e.g., electronic transmission) to an intended recipient.

Yet another possible product label embodiment is illustrated in FIG. 4b. In this embodiment, the product label **400** includes only a single portion **405** on which all desired information is displayed. The typical product information **410** may be shown along with an associated PLU bar code **415.** Consumer information may be embedded on the label **400** as a unique bar code **420** or may be appended to the PLU bar code **415** in extended/advanced bar code form. As such a label is designed to remain affixed to a product, it is intended that the embedded consumer information will be extracted at the POS register as described with respect to one embodiment associated with FIG. 4a.

One skilled in the art would no doubt realize that it may be possible to collect desirable consumer information at a weighing scale and to transmit the information directly from the weighing scale to an intended recipient. That is, consumer information could be collected at a weighing scale as previously described and then transmitted in real time, or temporarily stored and subsequently transmitted, to an intended recipient without the need to embed the consumer information on a coupon or label.

Such an embodiment is considered to be within the scope of the present invention, as modern scales are, or can be, provided with the communication mechanisms required to make such transmissions. It is believed, however, that there are certain advantages that may be achieved by embedding the consumer information on a coupon or label that is presented (e.g., by physical collection of appropriate coupon/label portions or extraction of embedded data) to a POS register.

One such advantage is the ability to also inventory other products selected by a consumer. Particularly, in addition to information specific to the consumer and to a product(s) associated with consumer information according to the present invention, processing the consumer information through a POS register or similar device also allows for the collection of data relative to other products selected by the consumer. This data may be useful in determining what products are most commonly purchased together, whether an ancillary/complimentary product for which a coupon was provided with a first selected product was also selected by the consumer, in what order certain products were selected (e.g., by evaluating products having time stamp information), or how long the consumer was in the store. Obviously, other useful information may also be gained by considering the full range of a consumer's product selections.

In this regard, it is possible that embedded consumer information that is electronically collected at a POS location may become part of a POS transaction log or similar data file, and could be related and associated with other items the consumer is purchasing. In such a case, if a retailer chose to provide this information, a marketer who received a redeemed coupon with embedded consumer information through the normal (non-electronic) clearing process could request additional information about the consumer's other purchases on a given day. For example, if a consumer who purchased ham redeemed a coupon associated with the ham along with the purchase of 15 other items, the consumer information portion of the coupon barcode may become part of the POS transaction log for that entire transaction. When the coupon is redeemed, it may also contain information about the retailer, store, etc. Therefore, a marketer receiving such a coupon could subsequently request from the retailer the additional information about this consumer - namely, the other items purchased by the consumer.

While certain embodiments of the present invention are described in detail above, the scope of the invention is not to be considered limited by such disclosure, and modifications are possible without departing from the spirit of the invention as evidenced by the claims stanting after page 29.

In the following, further aspects of the invention are listed, which can be essential to the invention in particular independent of their realizations described with view to the figures
1. A method for providing consumer information on a printed coupon, comprising:
   providing an electronic service device adapted to store data associated with at least one promotion and to produce a coupon reflective of said promotion;
   identifying a product selected by a consumer to/with said electronic service device;
   collecting consumer information and providing said information to said electronic service device;
   producing a coupon reflective of at least one promotion, said coupon having at least some of said consumer information embedded on a portion thereof;
   associating said coupon with said product;
   collecting said embedded consumer information at a point-of-sale location when said product is subsequently presented thereto; and
   transmitting said consumer information to an intended recipient.
2. The method of item 1, further comprising collecting transaction information and providing said information to said electronic service device.
3. The method of item 1 or 2, wherein said consumer information includes one or more of demographic data, customer survey question responses, time of day data, transaction time data, store location data, and information captured from senor devices.
4. The method of one of items 1 to 3, wherein said promotion is based at least in part on said collected consumer information.
5. The method of one of items 1 to 4, wherein said consumer information is embedded on said coupon in the form of a bar code.
6. The method of item 5, wherein said bar code is a unique bar code.
7. The method of item 5, wherein said bar code is an advanced or extended bar code that also contains other data.
8. The method of item 7, wherein said other data is PLU data.
9. The method of item 7, wherein said other data is promotion data.
10. The method of one of items 1 to 9, wherein said embedded consumer information is collected at said point-of-sale location by detaching and retaining said portion of said coupon on which said information is embedded.
11. The method of one of items 1 to 9, wherein said embedded consumer information is collected at said point-of-sale location by extracting said information from said coupon.
12. The method of one of items 1 to 11, further comprising collecting additional consumer information subsequent to producing said coupon and transmitting said additional information to an intended recipient.
13. The method of claim 12, wherein said additional information is related to other products selected by said consumer.
14. The method of item 12 or 13, wherein said additional consumer information is transmitted in conjunction with said embedded consumer information.
15. The method of item 12 or 13, wherein said additional consumer information is transmitted subsequent to transmission of said embedded consumer information.
16. The method of item 15, wherein said additional consumer information is transmitted in response to a request for such information from said intended recipient.
17. The method of one of items 1 to 16, wherein said electronic service device is a weighing scale.
18. The method of one of items 1 to 16, wherein said electronic service device is a kiosk.
19. A method for providing consumer information on a printed coupon, comprising:
   providing a weighing scale adapted to store data associated with at least one promotion and to produce a coupon reflective of said promotion;
   receiving a product selected by a consumer on said weighing scale;
   collecting consumer and, optionally, transaction information, and providing said information to said weighing scale;
   producing a coupon reflective of at least one promotion, said coupon having at least some of said consumer information embedded on a portion thereof;
   associating said coupon with said product;
   collecting said embedded consumer information at a point-of-sale location when said product is subsequently presented thereto; and
   transmitting said consumer information to an intended recipient.
20. The method of item 19, wherein said promotion is based at least in part on said collected consumer information.
21. The method of item 19 or 20, wherein said consumer information is embedded on said coupon in the form of a bar code.
22. The method of item 21, wherein said bar code also includes PLU data.
23. The method of item 21 or 22, wherein said bar code also includes promotion data.
24. The method of one of items 19 to 23, wherein said embedded consumer information is collected at said point-of-sale location by detaching and retaining said portion of said coupon on which said information is embedded.
25. The method of one of items 19 to 23, wherein said embedded consumer information is collected at said point-of-sale location by extracting said information from said coupon.
26. The method of one of items 19 to 25, further comprising collecting additional consumer information subsequent to producing said coupon and transmitting said additional information to an intended recipient.
27. The method of item 26, wherein said additional information is related to other products selected by said consumer.
28. A method for providing consumer information on a printed coupon, comprising:
   providing a kiosk adapted to store data associated with at least one promotion and to produce a coupon reflective of said promotion;
   facilitating consumer interaction with said kiosk;
   collecting consumer and, optionally, transaction information, and providing said information to said kiosk;
   producing a coupon reflective of at least one promotion, said coupon having at least some of said consumer information embedded on a portion thereof;
   associating said coupon with said product;
   collecting said embedded consumer information at a point-of-sale location when said product is subsequently presented thereto; and
   transmitting said consumer information to an intended recipient.
29. The method of item 28, wherein said promotion is based at least in part on said collected consumer information.
30. The method of item 28 or 29, wherein said consumer information is embedded on said coupon in the form of a bar code.
31. The method of one of items 28 to 30, wherein said bar code also includes PLU data.
32. The method of one of items 28 to 31, wherein said bar code also includes promotion data.
33. The method of one of items 28 to 32, wherein said embedded consumer information is collected at said point-of-sale location by detaching and retaining said portion of said coupon on which said information is embedded.
34. The method of one of items 28 to 32, wherein said embedded consumer information is collected at said point-of-sale location by extracting said information from said coupon.
35. The method of one of items 28 to 34, further comprising collecting additional consumer information subsequent to producing said coupon and transmitting said additional information to an intended recipient.
36. The method of item 35, wherein said additional information is related to other products selected by said consumer.
37. A method for providing consumer information on a printed label, comprising:
   providing an electronic service device adapted to store data associated with a plurality of products and to produce labels associated with said products;
   identifying a product selected by a consumer to/with said electronic service device;
   collecting consumer information and providing said information to said electronic service device;
   producing a label reflective of said product, said label having at least some of said consumer information embedded on a portion thereof;
   associating said label with said product;
   collecting said embedded consumer information at a point-of-sale location when said product is subsequently presented thereto; and
   transmitting said consumer information to an intended recipient.
38. The method of item 37, wherein said electronic service device is a weighing scale.
39. The method of item 37, wherein said electronic service device is a kiosk.

## Claims

1. A method for providing consumer information printed on a coupon or a label, comprising:
providing an electronic service device adapted to store data associated with at least one promotion and to produce the coupon, which is reflective of the promotion or to store data associated with a plurality of products and to produce the label, which is associated with at least one of the products;
identifying a product selected by a consumer to/with said electronic service device;
collecting consumer information and, optionally, transaction information, and providing the information to the electronic service device;
producing the coupon or the label, having at least some of the consumer information embedded on a portion thereof;
associating the coupon or the label with the product;
collecting the embedded consumer information at a point-of-sale location when the product is subsequently presented thereto; and
transmitting the consumer information to an intended recipient.

2. The method of claim 1, wherein the electronic service device is a weighing scale.

3. The method of claim 1, wherein the electronic service device is a kiosk.

4. The method of any of claims 1-3, further comprising collecting transaction information and providing the information to the electronic service device.

5. The method of any of claims 1-3, wherein the consumer information includes at least one of: demographic data, customer survey question response dat, time of day data, transaction time data, store location data, and data captured from sensor devices.

6. The method of any of claims 1-3, wherein the promotion is based at least in part on the collected consumer information.

7. The method of any of claims 1-3, wherein the consumer information is embedded on the coupon or the label in the form of a bar code.

8. The method of claim 7, wherein the bar code is a unique bar code.

9. The method of claim 7 or 8, wherein the bar code is an advanced or extended bar code that contains other data.

10. The method of claim 9, wherein the other data is at least one of: PLU data and promotion data.

11. The method of any of claims 1-3, wherein the embedded consumer information is collected at the point-of-sale location by detaching and retaining the portion of the coupon or the label containing the embedded information.

12. The method of any of claims 1-3, wherein the embedded consumer information is collected at the point-of-sale location by extracting the information from the coupon or the label.

13. The method of any of claims 1-3, further comprising collecting additional consumer information subsequent to producing the coupon or the label and transmitting said additional information to an intended recipient.

14. The method of claim 13, wherein said additional information is related to other products selected by the consumer.

15. The method of claim 13 or 14, wherein the additional consumer information is transmitted in conjunction with the embedded consumer information.

16. The method of any of claims 13-15, wherein the additional consumer information is transmitted subsequent to transmission of the embedded consumer information.

17. The method of any of claims 13-16, wherein the additional consumer information is transmitted in response to a request for such information from the intended recipient.
